(19) **Europäisches Patentamt / European Patent Office / Office européen des brevets**

(11) **EP 2 820 802 B1**

(12) **EUROPEAN PATENT SPECIFICATION**

(45) Date of publication and mention
of the grant of the patent:
**23.03.2022 Bulletin 2022/12**

(21) Application number: **13708117.0**

(22) Date of filing: **27.02.2013**

(51) International Patent Classification (IPC):
***H04L 12/58*** *(2006.01)*

(52) Cooperative Patent Classification (CPC):
**H04L 51/08; H04L 51/14**

(86) International application number:
**PCT/EP2013/053971**

(87) International publication number:
**WO 2013/127883 (06.09.2013 Gazette 2013/36)**

(54) **ELECTRONIC COMMUNICATION**

ELEKTRONISCHE KOMMUNIKATION

COMMUNICATION ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.02.2012 GB 201203557**

(43) Date of publication of application:
**07.01.2015 Bulletin 2015/02**

(73) Proprietor: **Qando Services Inc.
Tortola (VG)**

(72) Inventors:
• **SYRGABEKOV, Iskender
London
Greater London W1W 5NG (GB)**

• **ZADAULY, Yerkin
Almaty, 050051 (KZ)**

(74) Representative: **Boult Wade Tennant LLP
Salisbury Square House
8 Salisbury Square
London EC4Y 8AP (GB)**

(56) References cited:
| | |
|---|---|
| **EP-A2- 1 387 239** | **WO-A1-02/25858** |
| **WO-A1-2004/077770** | **JP-A- 2003 036 232** |
| **US-A1- 2010 070 594** | **US-B1- 7 730 540** |

## Description

### Field of the Invention

The present invention relates to a system and method for sending and receiving electronic communications and in particular, electronic mail.

### Background of the Invention

Electronic mail or email is a well known method of exchanging digital messages across the Internet or other computer networks. A user may compose an email using a personal computer or terminal, such as a smart phone, specifying a recipient or recipient address and message. The user then sends the email from his or her own terminal or personal computer across the network or the Internet, to an email server. The user may have an account or mailbox on the email server for either or both sending and receiving email messages.

Once the email server receives the email from the user it is sent using a standardised transfer protocol such as the simple mail transfer protocol (SMTP) across the network or the Internet to the recipient's own email server for which they hold an account or mailbox.

When the recipient connects to their own email server, any waiting emails may be viewed or downloaded onto their terminal or personal computer. There are several alternative methods for sending and receiving email including the use of email clients such as Microsoft (RTM) Outlook and Apple OSX (RTM) Mail. These clients are email applications resident on a user's personal computer (or other device) and connect with the email server as and when required.

For receiving emails, the email server may operate alternative protocols such as the Post Office Protocol (POP) or Internet message access protocol (IMAP). These are the two most common Internet standard protocols for email retrieval but others may be used.

The email message itself may comprise header information including information regarding the sender and receiver, a message body, which is the message itself and optionally attachments in the form of computer readable files sent along with the email. However, email is generally a text-based facility with any formatting sent in the form of a text-based mark-up language such as HTML.

As the recipient does not need to be directly connected to the sender of an email message, it is not possible to determine whether or not a receiver received the email unless a read receipt is provided from the receiver and successfully returned. Furthermore, it is possible and likely that a certain proportion of email messages are lost in transit for various reasons. As email messages are sent as plain text across the public Internet it is relatively easy for these email messages to be intercepted and read or altered en route. Therefore, certain schemes for encrypting email messages are used and these require additional processing at the sending a receiving ends. Nevertheless, it is still possible for these encrypted email messages to be lost before being received by the recipient.

Therefore, there is required a system of sending and receiving electronic mail that overcomes these problems.

WO02/25858 describes a method and apparatus for automatic transfer of data across a communications network. The data is divided into batches prior to transfer and a record of the batches is maintained.

### Summary of the Invention

An original message that would otherwise form the body of an electronic communication such as an email, for example (or the entire electronic communication itself) is divided into several message components. Each of these message components are attached to a single email, which is sent from the sender or a client residing on the sender's terminal or computer to a message server. Once received, this single email has its attached components extracted by the message server, which are then re-attached to separate emails to be sent to a further message server (or the same one) preferably via separate mail servers. On receipt, the message server extracts each component and then attaches each one to a further single email for forwarding to the recipient (or a client residing on the recipient terminal).

There are several alternative ways of dividing the content including bitwise, byte wise and character-by-character. Without all of the components, it is difficult or impossible to reconstruct the original message. Therefore, the chance of successful interception by a third party or unauthorised access is reduced.

There is described a method of sending electronic communications or mail according to claim 1. There is also described a message server according to claim 6, an e-mail client according to claim 8, a system according to claim 11 and a computer readable medium according to claim 12.

According to a first illustrative example there is provided a method of sending electronic communications or mail comprising the steps of:

dividing the message into a plurality of components;

attaching each one of the plurality of components to a single email; and
sending the email containing the attachments to a message server configured to perform the step of transmitting the message to a recipient. Therefore, the message and any attachments may be sent more securely and reliably. The dividing step or algorithm may be achieved using a separate module (core), which may resided within a client program such as an email client.

Performing the step of transmitting the message comprises the steps of: extracting the attached components from the single email; attaching each extracted component to a separate email; and sending each separate email to the recipient. This further increases security. Each separate email may be received by a further or the same message server, each component may be extracted from each separate email, the components combined within a further single email to be sent to the recipient email client. Once received, the each component may be extracted and combined to recreate the original message, communication, and any attachments.

Preferably, each separate email may be sent through a different email server. This makes it more difficult to successfully intercept all components.

Preferably, the method may further comprise the step of combining the plurality of components to form the message. This allows the message to be received.

Advantageously, dividing the message into the plurality of components from the message may comprise the steps of:

dividing the message into a plurality of message components; and
generating parity data for groups of two or more of the plurality of message components such that any one or more of the plurality of message components may be recreated from the remaining message components and the parity data. This improves resilience to loss of individual message components. Parity data may also be considered as being redundant data.

Dividing the message into the plurality of components from the message further comprise:

dividing the message into a plurality of message components; and
generating parity data for each message component and another message component of the plurality of message components.

The message components and the parity data form the components. Therefore, both the message components and parity data may be processed and sent in the same way.

Optionally, the dividing step may further comprise:

dividing the message components into further message components; and
generating further parity data for groups of two or more of the further message components such that any one or more of the further message components may be recreated from the remaining further message components and the further parity data. This further improves resilience to loss of message components, as more may be lost without losing the ability to recreate the original data or message.

Optionally, the dividing step may further comprise: generating parity data for each message component and a second other message component of the plurality of data subsets

Preferably, at least two sets of parity data may be generated for every data subset. Therefore, multiple different combinations of message components may be used to generate redundant or parity data. Preferably, at least each message component will be used twice.

Optionally, the method may further comprise the step of adding a mail header to the single email. This may be used to identify the message or indicate to a recipient how to recover the original message and/or attachments. It may also include information found in a conventional email header.

According to a second illustrative example, there is provided a method of receiving a message or electronic communications comprising the steps of:

receiving from a message server a single email message containing a plurality of attached components;
extracting the attached components from the single email; and
combining the components from the received single email to form a message. This may be used to receive the messages sent according to the method of the first aspect. The combining step may be carried out by an algorithm located within an email client, for example.

Preferably, the components may comprise message components and parity data generated from groups of two or more of the message components and combining the components comprises:
generating any missing message components from the received parity data and message components, and combining the received message components and generated message components to form the message.

Advantageously, the method may further comprise the steps of:

at the message server receiving a plurality of separate emails each containing one of plurality of components;
extracting each of the plurality of components from the separate emails; and
attaching the plurality of components to the single email.

Optionally, the message may comprise plain text and/or an attached file.

According to a third illustrative example, there is provided a message or communications server comprising a processor configured to:

receive an email containing a plurality of attached components;
extract the attached components from the email;
attach each extracted component to a separate email; and
send each separate email to a recipient. The message server may form part of a distributed mail system. The processor may be a virtual processor residing on a virtual server for example.

Preferably, the processor may be further configured to:

receive from a sender a plurality of emails each containing an attached component;
extract the attached components from the plurality of emails;
attach the extracted components to a single email; and
send the email with attached components to a recipient.

According to a fourth illustrative example, there is provided an email client comprising program instructions to:

divide a message into a plurality of components;
attach each one of the plurality of components to a single email; and
send the email containing the attachments to a message server configured to perform the step of transmitting the message to a recipient.

The program instructions to divide the message into a plurality of components further includes instructions to:

divide the message into a plurality of message components; and
generate parity data for each message component and another message component of the plurality of message components.

Optionally, the email client may further comprise program instructions to:

receive from the message server a single email message containing a plurality of attached components;
extract the attached components from the single email; and
combine the components from the received single email to form a message.

Preferably, the components comprise message components and parity data generated from groups of two or more of the message components and wherein the program instructions to combine the components may comprise program instructions to:
generate any missing message components from the received parity data and message components, and combining the received message components and generated message components to form the message.

According to a fifth illustrative example, there is provided a system comprising one or more message servers as previously described and a plurality of email clients as previously described. The mail server and client may be located together or separate. The system may form a distributed mail, email or communications system.

The methods described above may be implemented as a computer program comprising program instructions to operate a computer. The computer program may be stored on a computer-readable medium or transmitted as a signal.

**Brief description of the Figures**

The present invention may be put into practice in a number of ways and examples will now be described with reference to the accompanying drawings, in which:

FIG. 1 shows a schematic diagram of a system for sending electronic communications including a message server and mail servers, given by way of example only;

FIG. 2 shows a schematic diagram of the system of figure 1 showing further details of the message server;

FIG. 3 shows a schematic diagram of the system for sending electronic communications of figure 1 showing further details of the message server;

FIG. 4 shows a flow diagram of a method for sending electronic communications including a dividing step;

FIG. 5 shows a flow diagram of a method for receiving electronic communications including a combining step;

FIG. 6 shows a schematic diagram indicating a method for generating parity data as part of the dividing step of figure 4, given by way of example only;

FIG. 7 shows a schematic diagram of an illustrative method for reconstructing missing data as part of the combining step of figure 5 and using parity data generated in accordance with the method shown in figure 6; and

FIG. 8 shows a schematic diagram of a further illustrative method for reconstructing missing data as part of the combining step of figure 5 and using the parity data generated using the method of figure 6.

It should be noted that the figures are illustrated for simplicity and are not necessarily drawn to scale.

**Detailed description of the preferred embodiments**

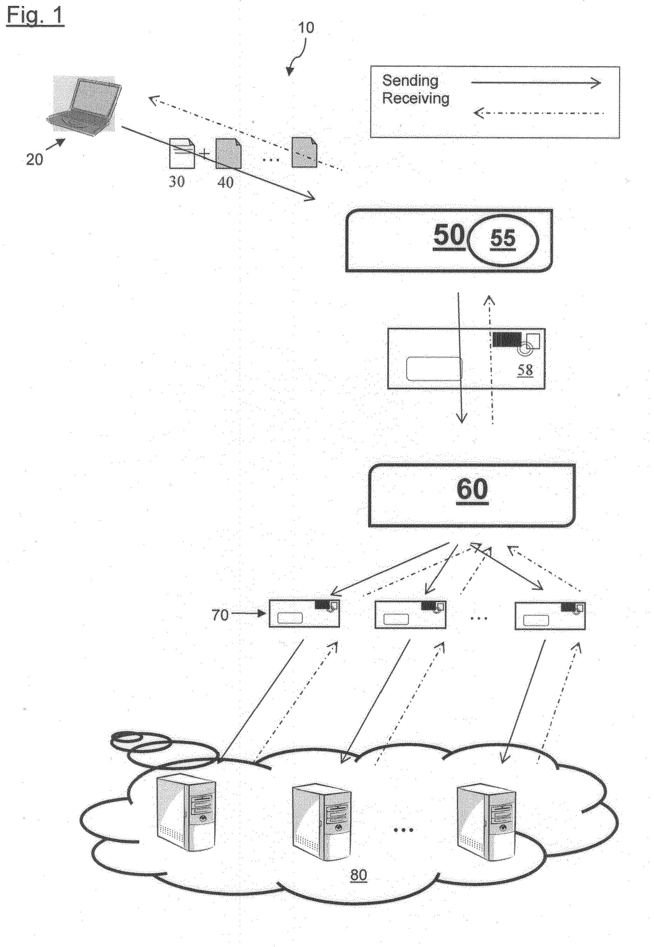

Figure 1 shows a high level schematic diagram of a system 10 for sending and receiving electronic communications and in particular electronic mail or email. Figure 1 shows a functional diagram of the main components of such a system 10 and not all parts are shown in this figure. The sender and receiver 20 in this example is shown as a personal computer, but may be any suitable device such as a laptop, desktop, mobile telephone or other terminal, for example. Electronic communications or emails being sent from the personal computer 20 are shown as solid line arrows. Dashed arrows (see the key) show electronic communications or email being received by the personal computer 20 as well as their route through the system 10.

The emails may be formed from a text message 30 and one or more attachments 40. The attachments may be electronic files or documents such as those usually attached to email messages. In this particular implementation, the text message and the attachment or attachments 40 form a single message that may be processed, as described below. However, messages may be sent with or without either the attachment or text 30 components.

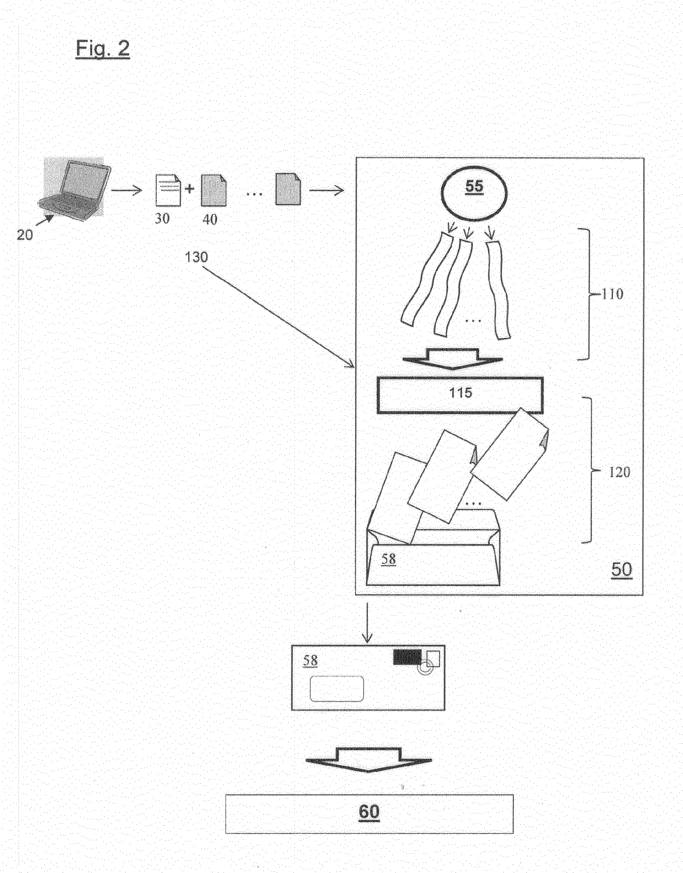

A client 50 may reside within the personal computer or other sending and receiving terminal 20. The client 50 may comprise core processing logic 55 configured to divide the message according to an algorithm. In this example, the client acts to process both outgoing and incoming messages, although it may be configured to do one of the two processes only. The function of the core logic 55 is described in further detail with respect to figure 2.

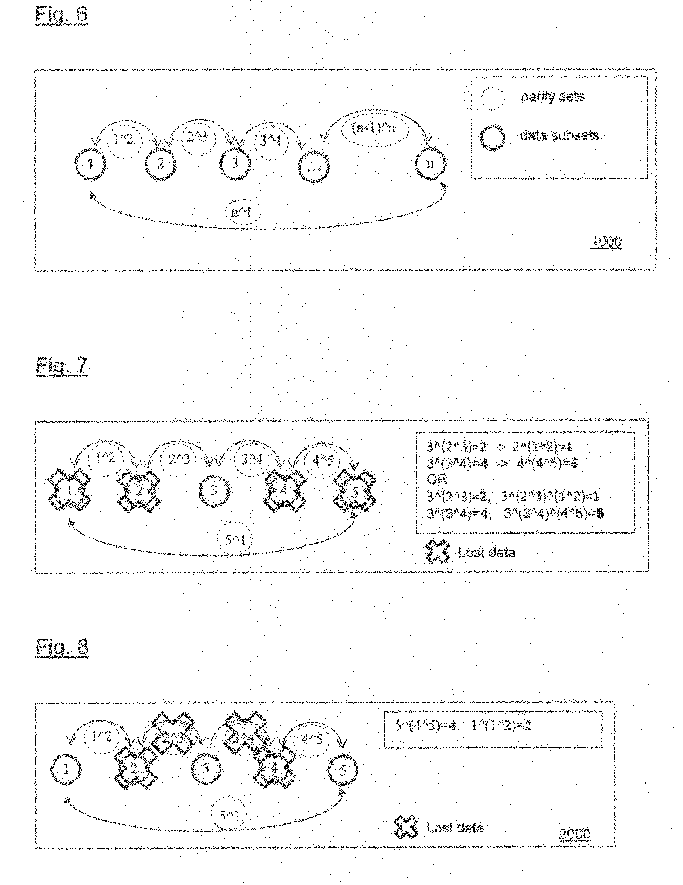

A gate, gateway or message server 60 is functionally (and/or physically) located between the client 50 and an array of email servers 80. The client provides a single email 58 to the message server 60. This single email 58 is generated by the client. Starting with message text 30 and any attachments 40 as a message to be sent (or electronic communication), this is then divided into a plurality of components. Each of these components are then attached to an email message forming the single email 58. The message may be divided in such a way as to allow reproduction or regeneration of the original message or payload (message text 30 and any attachments 40) even where one or more of the components is lost or corrupted in transit. A suitable division algorithm is described briefly with reference to figures 6, 7 and 8.

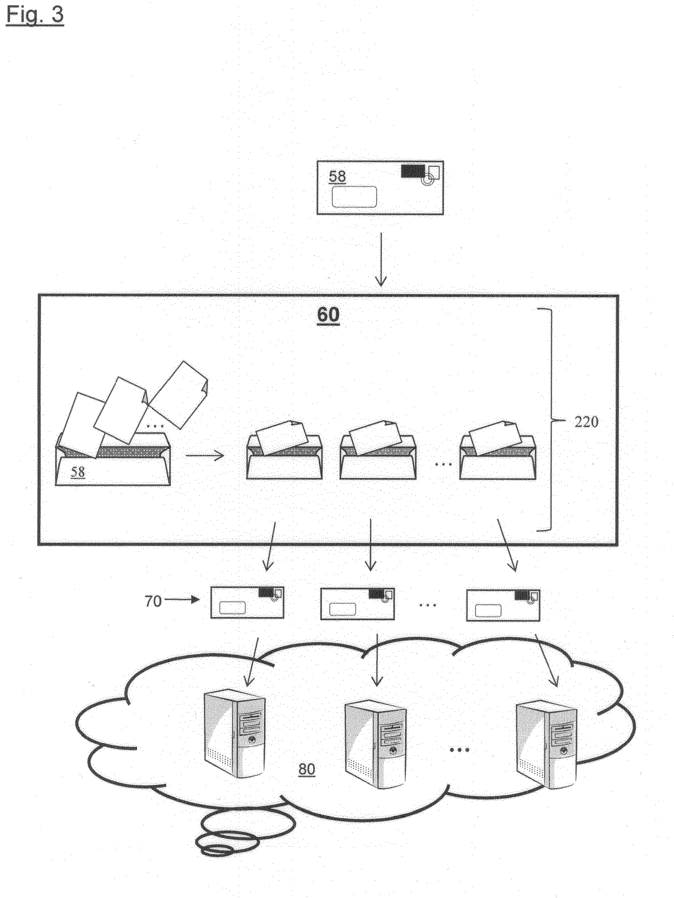

Again, the message server 60 functionality may include both sending and receiving logic. The sending logic is described in further detail with regards to figure 3.

As a functional overview, message server 60 extracts each message component from the single email 58 and attaches each component to a separate email 70. The message server 60 also sends each of these separate emails 70 to separate mail servers 80 for onward delivery. For example, each separate email 70 may be sent by a different mail server 80 or groups of emails 70 may be sent through one email server 80. However, it is preferable that not all separate emails 70 are sent through the same mail server 80 in order to maintain security and reliability. Particular mail servers within such an array of mail servers 80 may be determined by the message server 60.

The dashed arrows indicate the direction through a system 10 for incoming messages towards the personal computer or receiving terminal 20. This corresponds with incoming separate emails 70 coming from the separate email servers 80 and received by the message server 60. Again, each of the separate emails contains a component as an attachment and the message server 60 extracts these components and adds them to a single email 58.

The single email 58 is received by the client 50 and its core processing logic 55 extracts each component from the email message 58 recreating the original message and any attachments. Any missing or corrupted components may be recreated by the core processing logic 55 using parity data and the remaining components. The client 50 then provides the original message text 30 and any attachments 40 (the message or payload) to the user of the personal computer 20.

Many such clients 50, residing on personal computers and other email receiving terminals, may be operated by separate users in order to send and receive messages between each other. There may also be several message servers 60 to provide the intermediary processing and balance any load or provide fail over resistance.

As described with reference to figure 1, figure 2 shows the processing that takes place within the client 50 in further detail in respect to the sending logical steps. Similar features are provided with the same reference numerals. Figure 2 is again a functional diagram and so not all implementation details are shown in this figure.

The functional components of the client 50 are shown in this figure. As described with reference to figure, the client performs two main functions in the sending mode. First function 110 is carried out by the core processing logic 55, which divides the message (formed from message text 30 and any attachments 40) into components. These resulting components may include both data and accompanying parity data, although both types of components are treated the same in the following procedure. Once the first stage 110 is complete, then a formatting component 115 receives the components and carries out the second function 120 of adding the components to a single email 58. This single email may receive header information 130 associated or generated with the original message text and/or attachments 40. The single email 58 may then be sent to the message server 60.

In receipt mode, the message server 60 issues or sends the single email 58 to the client 50, which extracts each component to be processed by the core processing logic 55 to generate the original message from those components.

Figure 3 shows a functional diagram of the procedures that occur within the message server 60 in further detail. Figure 3 shows the message server 60 in sending mode in which it receives a single email message 58 from the client 50 (as described with reference to figure 1). The processing that is carried out in the message server 60 is shown as feature 220. The separate attachments that are included with the single email 58 are extracted, each one added to a separate email 70 and then sent through separate email servers 80. The message server 60 may be located separately from the mail servers 80, or may be local to one or more of them. Furthermore, each of these servers may be virtual or functional servers operated within a larger physical system such as a data centre, for example.

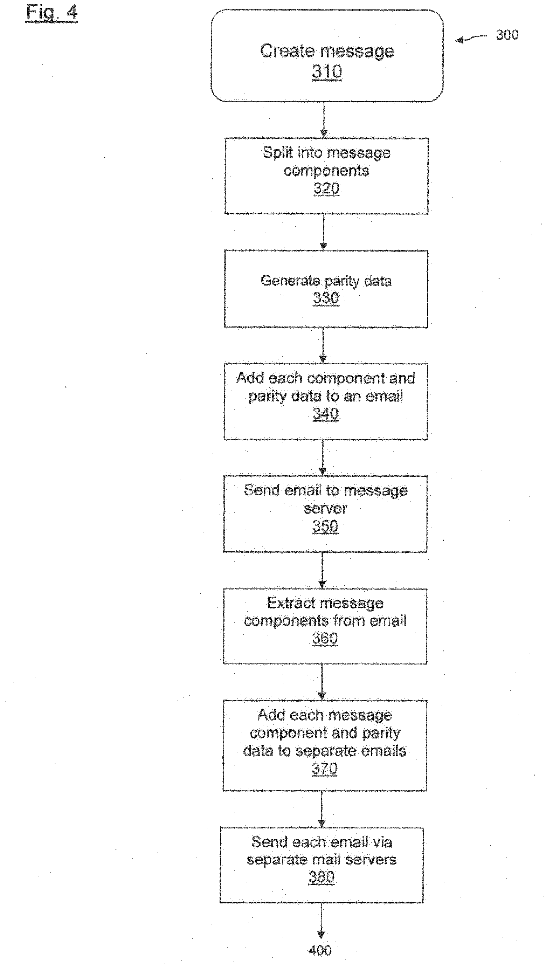

Figure 4 shows a flowchart of a method 300 for sending a message using the functional components described with reference to figures 1 to 3. A user may create a message at step 310 on a personal computer 20 or other suitable terminal. Within the client 50 the message is split into components 320. Parity data is generated at step 330 such that any missing components may be recreated from the remaining components and parity data. The message components and parity data form components to be added an email at step 340. This single email is sent to message server 60 at step 350.

The message server extracts message components and parity data (the components) from the email at step 360. Each message component and parity data may be added or attached to separate emails 70 at step 370. Each separate email 70 may be sent via separate mail servers at step 380.

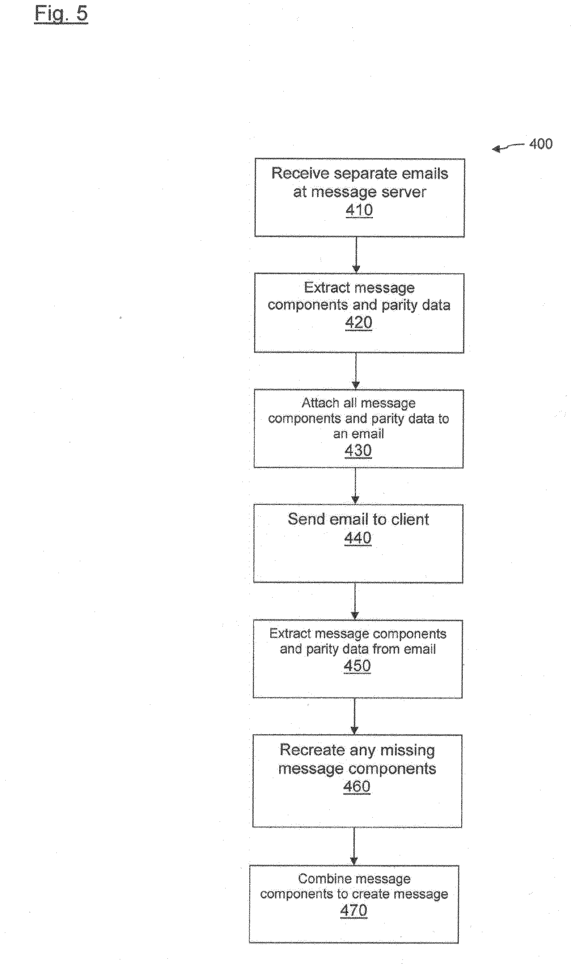

Figure 5 shows a flowchart of steps of a method 400 for receiving the message generated from method 300. Each separate email 70 is received at the message server (or another message server) 60 at step 410. The message components and parity data (components) are extracted from those separate emails 70 at step 420. The message server 60 then attaches each extracted message component and parity data to a single email 58 at step 430.

The single email is sent to the client 50 located on a personal computer 20 or other terminal at step 440. This may be achieved through a single mail server or other mechanism. The components (message components and parity data) are extracted from the single email 58 at step 450 and any missing message components are recreated from the remaining message components and parity data at step 460. Combining the message components creates the original message to be presented to the user or otherwise used by the personal computer or terminal 20.

Simple division of the message may be used to generate message components of equal or substantially equal size or length. However, in order to improve security and/or data recovery then more complex error correcting or secure algorithms may be used in this procedure. Corresponding regeneration or combining algorithms or collating steps may be used when receiving messages. To aid reliability, the components may include parity data generated as described with reference to figures 6, 7 and 8. As an example, this processing may occur within or as part of the core processing logic 55.

For example, parity data may be generated using the exclusive OR function (XOR). e.g.:

```
(A)0100 ^ (B)0010 = (P)0110                    equation 1
```

where ^ is the XOR function.

Should either data set A or B (i.e. message component) be lost, then the missing data may be reconstructed from the remaining data and the parity data (P) using the same XOR function, for example:

$$(A)\,0100 \; \verb|^| \; (P)\,0110 = (B)\,0010 \qquad\qquad \text{equation 2}$$

In order to generate redundant data to protect a particular message or data set, then this original data (F) may be divided into equal blocks or subsets. This may be represented as:

$$F\{1,\; 2,\; 3,\; \dots\, n\} \qquad\qquad \text{equation 3}$$

Parity data may be generated as:

$$1\verb|^|2,\; 3\verb|^|4,\; \dots\; (n-1)\verb|^|n \qquad\qquad \text{equation 4}$$

Figure 6 shows a method 1000 for generating more robust sets of parity data. This method 1000 allows for a greater number of data subset (and/or parity data) losses before the data becomes unrecoverable. The solid numbered circles 1, 2, 3,...n, represent data subsets formed by dividing the original data. Two sets of parity data are generated for each data subset. Each data subset is paired with another data subset and parity data is generated. The data subset is then paired with a different data subset and a further set of parity data is generated. In other words, each data subset is associated with two different other data subsets with parity data generated for each pairing. For example, in figure 6 this is shown as each data subset being paired with both of its neighbours (e.g. 2 paired with 1 and 2 also paired with 3). The first (1) and last (n) data subsets only have one neighbour (2 and n-1 respectively).

Therefore, the first data subset is paired with the last data subset so that more than one set of parity data may be associated with the end data sets. However, any other combination and permutation may be used so that each data subset has at least two parity data sets associated with it. In notation form, this may be described as:

$$C\{1\verb|^|2,\; 3\verb|^|4,\; \dots\; (n-1)\verb|^|n,\; n\verb|^|1\} \qquad\qquad \text{equation 5}$$

In an example where the original data are divided into five data subsets, the loss of four data subsets may still enable reconstruction of all of the original data provided that all of the parity data sets are retrievable. Such a situation is shown in figure 7, which schematically shows an example method 100 for reconstructing or regenerating missing data subsets.

In this example, the third data subset is available as well as the five parity data sets (1^2, 2^3, 3^4, 4^5 and 5^1). The box in figure 7 shows two alternative ways in which each of the missing data subsets 1, 2, 4 and 5 may be reconstructed using the XOR function.

Figure 8 shows a further example situation in which, five data subsets and created from original data but where two of the data subsets and two of the parity data sets (2^3 and 3^4) are lost or missing. In this particular reconstruction method 2000, the two missing data subsets 2 and 4 are recovered using the XOR operations shown in the side box.

In general terms, the loss of data subsets in any combination up to (n-1) may still result in all of the data being recoverable.

It is noted that the particular examples shown in figures 7 and 8 are two of many alternative combinations and schemes for recovering data. Furthermore, it is noted that the cyclic approach shown in figure 6 for generating two parity data sets for each data subset is one of many alternatives. For example, each data subset may be paired with non-neighbouring subsets to form parity data.

When dividing the data into data subsets, a predetermined number of data subsets may be chosen. This may relate to the number of available or required storage locations (for each data subset and each parity data set) that are to be used, or separate data channels or other means of transmitting the data subsets from one location to another.

As will be appreciated by the skilled person, details of the above embodiment may be varied without departing from the scope of the present invention, as defined by the appended claims.

For example, the message may be formatted or unformatted or may contain attachments that are also divided into message components or attachment components. Electronic communication includes many types including but not limited to email, SMS, instant messaging, text, image, video and audio based communication media. Furthermore, electronic communication or mail servers are those devices that either send or receiver (or both) those electronic communications.

There are many different ways of dividing and combining components to form the message other than those described, which are provided as examples only. This include simply dividing the data equally with padding provided optionally as necessary. There are also many different ways to generated parity data (if at all). These methods include applying the XOR logical function in different ways as well as using the Solomon-Reed function. Parity data may also be considered to be redundant data. In this context redundant data is data that is not necessary if all message components are available or safely received but they may be used to assist in regenerating or replicating any missing components or those that for some reason (e.g. corruption) are unavailable. Therefore, the terms parity data and redundant data may be used interchangeably.

**Claims**

1. A method of sending electronic communications comprising the steps of:

   at an email client (50):

      dividing a message (30, 40) into a plurality of message components;
      generating parity data for each message component and another message component of the plurality of message components, wherein the message components and the parity data form a plurality of components;
      attaching each one of the plurality of components to a single email (58); and
      sending the single email (58) containing the attached components to a message server (60) configured to perform the step of transmitting the message to a recipient; and

   at the message server (60):

      receiving the single e-mail (58) containing the attached components from the email client (50);
      extracting the attached components from the single email (58);
      attaching each extracted component to a separate email (70); and
      sending each separate email (70) to the recipient.

2. The method of claim 1, wherein each separate email (70) is sent through a different email server (80).

3. The method according to any previous claim further comprising the step of combining the plurality of components to form the message (30, 40).

4. The method according to any previous claim, wherein the dividing step further comprises:
   generating further parity data for each message component and a second other message component of the plurality of message components.

5. The method of claim 4, wherein at least two sets of parity data are generated for every message component.

6. A message server (60) comprising a processor configured to:

   receive a single email (58) from an e-mail client (50), the e-mail containing a plurality of attached components, wherein the plurality of attached components includes message components and parity data, wherein the message components have been formed by the e-mail client (50) by dividing a message into a plurality of message components and the parity data have been generated by the e-mail client (50) for each message component and another message component of the plurality of message components;
   extract the attached components from the single email (58);
   attach each extracted component to a separate email (70); and

   send each separate email to a recipient.

7. The message server (60) of claim 6, wherein the processor is further configured to:

   receive from a sender a plurality of separate emails (70) each containing an attached component;
   extract the attached components from the plurality of separate emails (70);
   attach the extracted components to a single email (58); and

send the single email (58) with attached components to a recipient.

8. An email client (50) comprising program instructions to

divide a message (30, 40) into a plurality of message components; and
generate parity data for each message component and another message component of the plurality of message components, wherein the message components and the parity data form a plurality of components;
attach the plurality of components to a single email (58); and
send the single email (58) containing the attached components to a message server (60) configured to perform the step of transmitting the message to a recipient.

9. The email client (50) of claim 8, further comprising program instructions to:

receive from the message server (60) a single email message (58) containing a plurality of attached components;
extract the attached components from the single email (58); and
combine the components from the received single email (58) to form a message (30, 40).

10. The email client (50) according to claim 8 or claim 9, wherein the components comprise message components and parity data generated from groups of two or more of the message components and wherein the program instructions to combine the components comprises program instructions to:
generate any missing message components from the received parity data and message components, and combining the received message components and generated message components to form the message (30, 40).

11. A system comprising one or more message servers according to claim 6 or claim 7 and a plurality of email clients according to any of claims 8 to 10.

12. A computer-readable medium carrying a computer program comprising program instructions that, when executed on a computer cause the computer to perform the method of any of claims 1 to 5.

**Patentansprüche**

1. Verfahren zum Senden von elektronischen Nachrichten, wobei das Verfahren die folgenden Schritte umfasst:

an einem E-Mail-Client (50):

Zerlegen einer Nachricht (30, 40) in eine Vielzahl von Nachrichtenbestandteilen;
Erzeugen von Paritätsdaten für jeden Nachrichtenbestandteil und eines weiteren Nachrichtenbestandteils aus der Vielzahl von Nachrichtenbestandteilen, wobei die Nachrichtenbestandteile und die Paritätsdaten eine Vielzahl von Bestandteilen bilden;
Anhängen eines jeden der Vielzahl von Bestandteilen an eine einzige E-Mail (58); und
Senden der einzigen E-Mail (58), welche die angehängten Bestandteile enthält, an einen Nachrichtenserver (60), welcher zur Ausführung des Schrittes der Übertragung der Nachricht an einen Empfänger konfiguriert ist; und

an dem Nachrichtenserver (60):

Empfangen der einzigen E-Mail (58), welche die angehängten Bestandteile enthält, von dem E-Mail-Client (50);
Extrahieren der angehängten Bestandteile aus der einzigen E-Mail (58);
Anhängen eines jeden extrahierten Bestandteils an eine separate E-Mail (70); und
Senden einer jeden separaten E-Mail (70) an den Empfänger.

2. Verfahren nach Anspruch 1, wobei jede separate E-Mail (70) über einen unterschiedlichen E-Mail-Server (80) gesendet wird.

3. Verfahren nach einem der vorhergehenden Ansprüche, welches des Weiteren den Schritt der Kombination der Vielzahl von Bestandteilen zur Erzeugung der Nachricht (30, 40) umfasst.

**4.** Verfahren nach einem der vorhergehenden Ansprüche, wobei der Zerlegungsschritt des Weiteren umfasst: Erzeugen von weiteren Paritätsdaten für jeden Nachrichtenbestandteil und eines zweiten anderen Nachrichtenbestandteils aus der Vielzahl von Nachrichtenbestandteilen.

**5.** Verfahren nach Anspruch 4, wobei zumindest zwei Sätze von Paritätsdaten für jeden Nachrichtenbestandteil erzeugt werden.

**6.** Nachrichtenserver (60), welcher einen Prozessor umfasst, der konfiguriert ist zum:

Empfangen einer einzigen E-Mail (58) von einem E-Mail-Client (50), wobei die E-Mail eine Vielzahl von angehängten Bestandteilen enthält, wobei die Vielzahl von angehängten Bestandteilen Nachrichtenbestandteile und Paritätsdaten einschließt, wobei die Nachrichtenbestandteile durch den E-Mail-Client (50) durch Zerlegen einer Nachricht in eine Vielzahl von Nachrichtenbestandteilen erzeugt worden sind, und die Paritätsdaten durch den E-Mail-Client (50) für jeden Nachrichtenbestandteil und einen weiteren Nachrichtenbestandteil der Vielzahl von Nachrichtenbestandteilen erzeugt worden sind;
Extrahieren der angehängten Bestandteile aus der einzigen E-Mail (58);
Anhängen des extrahierten Bestandteils an eine separate E-Mail (70); und
Senden einer jeden separaten E-Mail an einen Empfänger.

**7.** Nachrichten-Server (60) nach Anspruch 6, wobei der Prozessor des Weiteren konfiguriert ist zum:

Empfangen von einem Absender einer Vielzahl von separaten E-Mails (70), welche alle einen angehängten Bestandteil enthalten;
Extrahieren der angehängten Bestandteile aus der Vielzahl von separaten E-Mails (70);
Anhängen der extrahierten Bestandteile an eine einzige E-Mail (58); und
Senden der einzigen E-Mail (58) mit den angehängten Bestandteilen an einen Empfänger.

**8.** E-Mail-Client (50), welcher Programmbefehle umfasst zum:

Zerlegen einer Nachricht (30, 40) in eine Vielzahl von Nachrichtenbestandteilen; und
Erzeugen von Paritätsdaten für jeden Nachrichtenbestandteil und eines weiteren Nachrichtenbestandteils aus der Vielzahl von Nachrichtenbestandteilen, wobei die Nachrichtenbestandteile und die Paritätsdaten eine Vielzahl von Bestandteilen bilden;
Anhängen der Vielzahl von Bestandteilen an eine einzige E-Mail (58); und
Senden der einzigen E-Mail (58), welche die angehängten Bestandteile enthält, an einen Nachrichtenserver (60), welcher zur Ausführung des Schrittes der Übertragung der Nachricht an einen Empfänger konfiguriert ist.

**9.** E-Mail-Client (50) nach Anspruch 8, welcher des Weiteren Programmbefehle umfasst zum:

Empfangen von dem Nachrichtenserver (60) einer einzigen E-Mail-Nachricht (58), welche eine Vielzahl von angehängten Bestandteilen enthält;
Extrahieren der angehängten Bestandteile aus der einzigen E-Mail (58); und
Kombinieren der Bestandteile aus der empfangenen einzigen E-Mail (58) zur Erzeugung einer Nachricht (30, 40).

**10.** E-Mail-Client (50) nach Anspruch 8 oder Anspruch 9, wobei die Bestandteile Nachrichtenbestandteile und Paritätsdaten umfassen, welche von Gruppen von zwei oder mehr der Nachrichtenbestandteile erzeugt werden, und wobei die Programmbefehle zum Kombinieren der Bestandteile Programmbefehle umfassen zum:
Erzeugen jeglicher fehlender Nachrichtenbestandteile aus den empfangenen Paritätsdaten und Nachrichtenbestandteilen, und Kombinieren der empfangenen Nchrichtenbestandteile und erzeugter Nachrichtenbestandteile zur Bildung der Nachricht (30, 40).

**11.** System, welches einen oder mehrere Nachrichtenserver nach Anspruch 6 oder Anspruch 7 umfasst, sowie eine Vielzahl von E-Mail-Clients nach einem der Ansprüche 8 bis 10.

**12.** Computerlesbarer Datenträger, welcher ein Computerprogramm aufweist, das Programmbefehle umfasst, die bei Ausführung auf einem Computer den Computer veranlassen, das Verfahren nach einem der Ansprüche 1 bis 5 auszuführen.

# EP 2 820 802 B1

**Revendications**

1. Procédé d'envoi de communications électroniques comprenant les étapes consistant à :

   au niveau d'un client de courrier électronique (50) :

   diviser un message (30, 40) en une pluralité de composants de message ;
   générer des données de parité pour chaque composant de message et un autre composant de message de la pluralité de composants de message, où les composants de message et les données de parité forment une pluralité de composants ;
   joindre chacun de la pluralité de composants à un courrier électronique unique (58) ; et
   envoyer le courrier électronique unique (58) contenant les composants joints à un serveur de messages (60) configuré pour effectuer l'étape de transmission du message à un destinataire ; et

   au niveau du serveur de messages (60) :

   recevoir le courrier électronique unique (58) contenant les composants joints du client de courrier électronique (50) ;
   extraire les composants joints du courrier électronique unique (58) ;
   joindre chaque composant extrait à un courrier électronique séparé (70) ; et
   envoyer chaque courrier électronique séparé (70) au destinataire.

2. Procédé selon la revendication 1, dans lequel chaque courrier électronique séparé (70) est envoyé via un serveur de courrier électronique différent (80).

3. Procédé selon l'une des revendications précédentes, comprenant en outre l'étape consistant à combiner la pluralité de composants pour former le message (30, 40).

4. Procédé selon l'une des revendications précédentes, dans lequel l'étape de division comprend en outre :
   la génération de données de parité supplémentaires pour chaque composant de message et un deuxième autre composant de message de la pluralité de composants de message.

5. Procédé selon la revendication 4, dans lequel au moins deux ensembles de données de parité sont générés pour chaque composant de message.

6. Serveur de messages (60) comprenant un processeur configuré pour :

   recevoir un courrier électronique unique (58) d'un client de courrier électronique (50), le courrier électronique contenant une pluralité de composants joints, où la pluralité de composants joints comporte des composants de message et des données de parité, où les composants de message ont été formés par le client de courrier électronique (50) en divisant un message en une pluralité de composants de message et les données de parité ont été générées par le client de courrier électronique (50) pour chaque composant de message et un autre composant de message de la pluralité de composants de message ;
   extraire les composants joints du courrier électronique unique (58) ;
   joindre chaque composant extrait à un courrier électronique séparé (70) ; et
   envoyer chaque courrier électronique séparé à un destinataire.

7. Serveur de messages (60) selon la revendication 6, dans lequel le processeur est en outre configuré pour :

   recevoir d'un expéditeur une pluralité de courriers électroniques séparés (70) contenant chacun un composant joint ;
   extraire les composants joints de la pluralité de courriers électroniques séparés (70) ;
   joindre les composants extraits à un courrier électronique unique (58) ; et
   envoyer le courrier électronique unique (58) avec les composants joints à un destinataire.

8. Client de courrier électronique (50) comprenant des instructions de programme pour

   diviser un message (30, 40) en une pluralité de composants de message ; et

11

générer des données de parité pour chaque composant de message et un autre composant de message de la pluralité de composants de message, où les composants de message et les données de parité forment une pluralité de composants ;
joindre la pluralité de composants à un courrier électronique unique (58) ; et
envoyer le courrier électronique unique (58) contenant les composants joints à un serveur de messages (60) configuré pour effectuer l'étape de transmission du message à un destinataire.

9. Client de courrier électronique (50) selon la revendication 8, comprenant en outre des instructions de programme pour :

recevoir du serveur de messages (60) un message électronique unique (58) contenant une pluralité de composants joints ;
extraire les composants joints du courrier électronique unique (58) ; et
combiner les composants provenant du courrier électronique unique reçu (58) pour former un message (30, 40) .

10. Client de courrier électronique (50) selon la revendication 8 ou la revendication 9, dans lequel les composants comprennent des composants de message et des données de parité générées à partir de groupes de deux ou plus de deux des composants de message et où les instructions de programme pour combiner les composants comprennent des instructions de programme pour :
générer tout composant de message manquant à partir des données de parité et des composants de message reçus, et combiner les composants de message reçus et les composants de message générés pour former le message (30, 40) .

11. Système comprenant un ou plusieurs serveurs de messages selon la revendication 6 ou la revendication 7 et une pluralité de clients de courrier électronique selon l'une des revendications 8 à 10.

12. Support lisible par ordinateur comportant un programme informatique comprenant des instructions de programme qui, lorsqu'elles sont exécutées sur un ordinateur, amènent l'ordinateur à effectuer le procédé selon l'une des revendications 1 à 5.

Fig. 1

Sending
Receiving

10

20

30   40

50   55

58

60

70

80

Fig. 2

Fig. 3

Fig. 4

```
                    ┌──────────────────────┐
                    │    Create message    │ ←──── 300
                    │        310           │
                    └──────────┬───────────┘
                               │
                               ▼
                    ┌──────────────────────┐
                    │  Split into message  │
                    │     components       │
                    │        320           │
                    └──────────┬───────────┘
                               │
                               ▼
                    ┌──────────────────────┐
                    │  Generate parity data│
                    │        330           │
                    └──────────┬───────────┘
                               │
                               ▼
                    ┌──────────────────────┐
                    │ Add each component and│
                    │ parity data to an email│
                    │        340           │
                    └──────────┬───────────┘
                               │
                               ▼
                    ┌──────────────────────┐
                    │ Send email to message│
                    │        server        │
                    │        350           │
                    └──────────┬───────────┘
                               │
                               ▼
                    ┌──────────────────────┐
                    │   Extract message    │
                    │ components from email│
                    │        360           │
                    └──────────┬───────────┘
                               │
                               ▼
                    ┌──────────────────────┐
                    │   Add each message   │
                    │  component and parity│
                    │ data to separate emails│
                    │        370           │
                    └──────────┬───────────┘
                               │
                               ▼
                    ┌──────────────────────┐
                    │  Send each email via │
                    │ separate mail servers│
                    │        380           │
                    └──────────┬───────────┘
                               │
                               ▼
                              400
```

Fig. 5

400

```
┌─────────────────────────┐
│   Receive separate emails│
│     at message server    │
│           410            │
└─────────────────────────┘
            │
            ▼
┌─────────────────────────┐
│    Extract message       │
│ components and parity data│
│           420            │
└─────────────────────────┘
            │
            ▼
┌─────────────────────────┐
│    Attach all message    │
│ components and parity data to│
│         an email         │
│           430            │
└─────────────────────────┘
            │
            ▼
┌─────────────────────────┐
│   Send email to client   │
│           440            │
└─────────────────────────┘
            │
            ▼
┌─────────────────────────┐
│ Extract message components│
│  and parity data from email│
│           450            │
└─────────────────────────┘
            │
            ▼
┌─────────────────────────┐
│   Recreate any missing   │
│   message components     │
│           460            │
└─────────────────────────┘
            │
            ▼
┌─────────────────────────┐
│    Combine message       │
│ components to create message│
│           470            │
└─────────────────────────┘
```

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0225858 A